# FASCICULE DE BREVET EUROPEEN

(11) **EP 1 405 710 B1**
(45) Date de publication et mention de la délivrance du brevet: **21.05.2008**
(21) Numéro de dépôt: 02022178.4
(22) Date de dépôt: 04.10.2002
(51) Int. Cl.: B29C 49/00

(54) **Préforme plastique à large col avec zone d'étanchéité interne protegée contre les détériorations mécaniques**
Weithalsvorformling mit Schutz gegen mechanische Schäden des Innenabdichtungsbereichs
Wide mouth preform with internal sealing zone protected against mechanical wear

(43) Date de publication de la demande: 07.04.2004
(73) Titulaire: Amcor Limited, Abbotsford, Victoria 3067 (AU)
(72) Inventeur: Haesendonckx, Frank, 2990 Wuustwezel (BE)
(74) Mandataire: Matkowska, Franck

(56) Documents cités:
- EP-A- 0 978 456
- US-A- 4 818 213
- US-A- 6 051 295
- PATENT ABSTRACTS OF JAPAN vol. 2000, no. 11, 3 janvier 2001 (2001-01-03) -& JP 2000 211017 A (TSUTSUMI YOTARO), 2 août 2000 (2000-08-02) -& DATABASE WPI Week 200057 Derwent Publications Ltd., London, GB; AN 2000-596590 XP002233958 & JP 2000 211017 A

## Description

La présente invention concerne le domaine de la fabrication de préformes plastiques qui sont obtenues par injection d'un matériau thermoplastique dans un moule, et qui sont destinées ensuite à être étirées en sorte de former des récipients plastiques. Elle a pour principal objet une nouvelle préforme plastique, dite « à large col », présentant en outre au niveau de son goulot, une zone d'étanchéité interne, qui est protégée contre les détériorations mécaniques pouvant découler de l'emboîtement avec une autre préforme, par exemple lors du stockage en vrac et/ou du transport des préformes. Les préformes de l'invention sont avantageusement, mais non exclusivement, utilisées pour fabriquer des récipients plastiques qui sont remplis dans des conditions aseptiques, et fermés au moyen d'un bouchon, capuchon ou équivalent, assurant une étanchéité aseptique interne au niveau du goulot.

### ART ANTERIEUR

Dans l'industrie de l'emballage, il est aujourd'hui largement répandu de fabriquer des récipients plastiques, par double étirage (axial et radial), et plus particulièrement par étirage et soufflage, de préformes dans un moule. De manière connue en soi, une préforme est constituée par un corps creux tubulaire qui est obtenu par injection d'un matériau plastique dans un moule. Les matériaux thermoplastiques disponibles à ce jour pour fabriquer une préforme sont variés, le polymère le plus utilisé à ce jour, en raison notamment de son faible coût, étant le polyéthylène téréphtalate (PET).

Il existe à ce jour deux méthodes principales de fabrication d'un récipient à partir d'une préforme. Une première méthode communément désignée « one stage process » consiste à réaliser la deuxième étape de fabrication du récipient en ligne et immédiatement après la première étape de fabrication de la préforme. La seconde méthode communément désignée « two stages process » consiste à séparer dans le temps les étapes de fabrication de la préforme et de fabrication du récipient. En pratique, dans cette seconde méthode, les préformes sont, à l'issue de leur étape de fabrication, stockées temporairement sur le site de production et éventuellement transportées jusqu'à un site de production de récipients plus ou moins distant du site de production de préformes. Pour leur stockage et/ou leur transport les préformes sont disposées en vrac dans des containers de stockage ou de transport.

D'un point de vue structurel, une préforme se présente sous la forme d'un corps creux tubulaire qui est ouvert à une première extrémité communément appelée buvant, et qui est fermé à son extrémité opposée par une première portion d'extrémité formant le fond de la préforme. La partie centrale dudit fond à la forme d'une pointe en saillie vers l'extérieur ou équivalent et correspond au point d'injection du corps creux. Le fond de la préforme se prolonge par une deuxième portion sensiblement cylindrique et formant la partie principale de la préforme. Le corps creux comporte en outre une troisième portion qui forme le goulot de la préforme et qui s'étend depuis le buvant. En pratique, la préforme comporte également, à proximité de son buvant, une collerette externe, le goulot de la préforme s'étendant depuis le buvant jusqu'à ladite collerette. Cette collerette est notamment utilisée, lors de l'opération d'étirage de la préforme dans un moule, pour maintenir en position la préforme dans le moule. Ainsi, lors de l'étape de fabrication d'un récipient par étirage d'une préforme dans un moule, seule la partie de la préforme située au dessous de la collerette (partie de la préforme entre la collerette et le point d'injection) est étirée, la collerette et la partie de la préforme située au-dessus de la collerette (c'est-à-dire le goulot) ne subissant aucun étirage.

La plupart des préformes fabriquées à ce jour présentent une section transversale (section prise dans un plan transversale à leur axe longitudinal principal) dont le diamètre externe est sensiblement constant sur toute la hauteur de la préforme, à l'exception bien évidement de la partie formant collerette extérieure et de la partie formant le fond de la préforme. Il en résulte dans ce cas, compte tenu de l'épaisseur de paroi de la préforme, que le diamètre interne de la préforme au niveau de son goulot est inférieur au diamètre externe de la préforme au niveau de sa portion principale sensiblement cylindrique.

Il existe toutefois un type particulier de préformes dont le diamètre externe n'est pas sensiblement constant, et qui plus précisément comportent un goulot dont le diamètre interne est supérieur au diamètre externe de la portion principale sensiblement cylindrique de la préforme, voir par example le document EP 0978456. Ce type particulier de préformes est désignée dans le présent texte par préformes « à large col ».

Pour fermer de manière étanche un récipient plastique obtenu à partir d'une préforme, il existe à ce jour différents moyens de fermeture. Une première catégorie de moyens de fermeture (bouchons, capuchons, opercules,...) se caractérise par une étanchéité réalisée au niveau de la paroi externe du goulot et /ou au niveau du buvant de la préforme. Une deuxième catégorie de moyens de fermeture (bouchon, capuchon,...) se caractérise par une étanchéité réalisée au niveau de la paroi interne du goulot. Une troisième catégorie de moyens de fermeture consiste à cumuler une étanchéité au niveau de la paroi externe du goulot et /ou au niveau du buvant de la préforme avec une étanchéité réalisée au niveau de la paroi interne du goulot.

Une étanchéité au niveau de la paroi interne du goulot (deuxième ou troisième catégorie précitée de moyens de fermeture) est plus particulièrement, mais non exclusivement, recherchée dans les applications où une étanchéité aseptique est recherchée (protection du contenu du récipient contre les bactéries, micro-organismes,...). Or on constate en pratique, que les préformes à large col présentent souvent des défauts d'étanchéité au niveau de la zone d'étanchéité interne de leur goulot, lesquels défauts sont préjudiciables à la bonne conservation des produits contenus dans les récipients qui sont formés à partir de ces préformes.

### OBJECTIF DE L'INVENTION

La présente invention vise à proposer, dans le domaine des préformes à large col et avec zone d'étanchéité interne au niveau du goulot, une solution qui permet de diminuer les défauts d'étanchéité dans la zone d'étanchéité interne du goulot.

### SOLUTION DE L'INVENTION

La solution de l'invention réside en partie dans le fait qu'il a été mis en évidence que ces défauts d'étanchéité étaient dus principalement à la présence de micro rayures ou micro rainures, qui se forment dans la zone d'étanchéité interne du goulot, lors du stockage en vrac ou du transport en vrac des préformes. Il a ainsi été mis en évidence que ces micro rayures ou micro rainures étaient provoquées par un emboîtement des préformes l'une dans l'autre, et plus particulièrement par un contact mécanique entre le point d'injection central du fond d'une préforme avec la paroi interne du goulot d'une autre préforme. De surcroît, il a été constaté que ces défauts d'étanchéité étaient d'autant plus importants ou fréquents, que le point d'injection central du fond de la préforme présente une dureté plus élevée que la paroi interne du goulot de la préforme, ce qui est le cas notamment lorsque le matériau thermoplastique (polymère ou mélange de polymères) utilisé pour fabriquer les préformes est apte à cristalliser, tel que par exemple du PET. En effet dans ce cas, le point d'injection du fond de la préforme est généralement à l'état cristallin, tandis que la paroi interne du goulot est généralement à l'état amorphe.

L'invention ainsi pour principal objet un ensemble préforme plastique /moyen de fermeture conforme à la revendication 1.

### BREVE DESCRIPTION DES DESSINS

D'autres caractéristiques et avantages de l'invention apparaîtront plus clairement à la lecture de la description suivante d'un exemple préféré de réalisation d'une préforme de l'invention, laquelle description est donnée à titre d'exemple non limitatif et non exhaustif, et en référence aux dessins annexés sur lesquels :
- la figure 1 représente une vue en section longitudinale d'une préforme à large col de l'invention fermée par un bouchon de fermeture assurant une étanchéité interne au niveau du goulot de la préforme,
- la figure 2 représente deux préformes conformes à la figure 1 emboîtées l'une dans l'autre,
- et la figure 3 représente deux préformes à large col, emboîtées l'une dans l'autre, qui ne sont pas conformes à l'invention, lesdites préformes comportant un goulot et un fond dont la forme et les dimensions ne permettent pas de garantir une protection d'une zone circonférentielle dans la zone d'étanchéité interne du goulot.

### DESCRIPTION DETAILLEE D'UN EXEMPLE PREFERE DE REALISATION

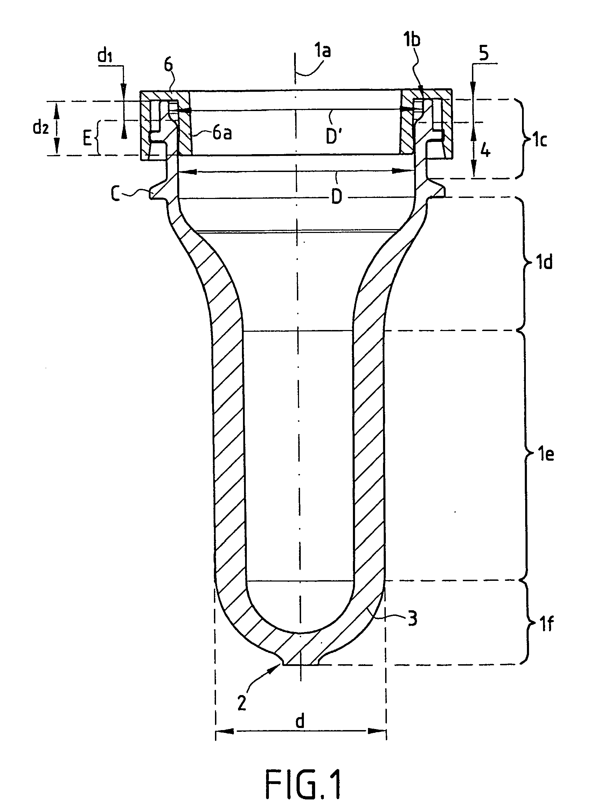

On a représenté sur la figure 1 un exemple préféré de réalisation d'une préforme 1, qui est conforme à l'invention, et qui a été fabriquée, de manière connue en soi par injection dans un moule d'un matériau thermoplastique. Cette préforme 1 consiste en un corps creux de forme générale tubulaire, d'axe longitudinal 1a, lequel corps creux est ouvert en première extrémité 1b dite « buvant », et est fermé à son extrémité opposée par une portion d'extrémité 1f formant le fond de la préforme 1. La préforme comporte en outre en partie supérieure, une portion d'extrémité 1c formant le goulot de la préforme, et s'étendant depuis le buvant 1b jusqu'à une collerette externe C. Le fond 1f de la préforme 1 comporte en partie centrale une portion 2 en saillie vers l'extérieur, qui correspond au point d'injection de la préforme dans le moule. Ce point d'injection 2 central communément appelé « gate » se prolonge par une portion 3, qui est communément appelée « end cap ». Dans l'exemple particulier illustré, cette portion 3 présente une forme sensiblement hémisphérique.

Le fond 1f de la préforme constitué du point d'injection 2 et de la portion de fond 3 précités se prolonge par une portion principale 1e du corps de la préforme, qui est sensiblement cylindrique. Cette portion principale 1e est reliée à la partie de la préforme comportant la collerette C par une portion intermédiaire 1d dont la section interne présente un diamètre croissant.

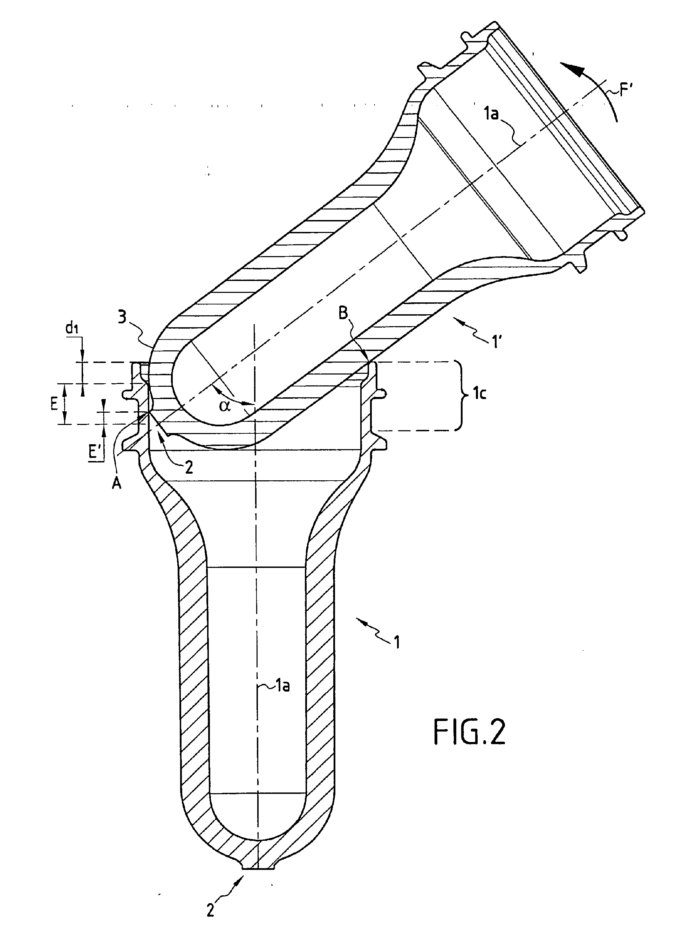

Dans l'exemple particulier illustré, le goulot 1c de la préforme 1 est constitué essentiellement de deux parties : une première partie cylindrique 4 de diamètre interne D (diamètre de la section interne du goulot 1c prise dans un plan transversal à l'axe longitudinal principal 1a) qui est sensiblement constant; une seconde partie 5, qui s'étend jusqu'au buvant 1d, et dont le diamètre interne D' est légèrement supérieure au diamètre D de la première partie cylindrique 4. Cette structure particulière du goulot 1c de la préforme de la figure 1 n'est pas limitative de l'invention, le goulot 1c pouvant dans une autre réalisation présenter par exemple un diamètre interne D sensiblement constant sur toute la hauteur du goulot. D'une manière générale, l'invention n'est donc pas limitée au goulot ayant la forme particulière de la figure 1, mais s'applique à toute préforme à large col, c'est-à-dire à toute préforme dont le diamètre interne (D, D') du goulot est supérieur au diamètre externe d (figure 1) de la portion principale 1e de la préforme, de telle sorte qu'il est possible d'emboîter deux préformes identiques l'une dans l'autre tel que cela est illustré sur la figure 2.

En référence à la figure 1, sur le goulot 1c et le buvant 1b de la préforme 1 est adapté un bouchon de fermeture 6 comportant une partie interne 6a qui coopère avec la paroi interne du goulot 1c en sorte de définir une zone d'étanchéité interne E au niveau du goulot 1c. La structure particulière de ce moyen de fermeture 6 de la figure 1 n'est pas limitative de l'invention, laquelle s'applique à tout moyen de fermeture, qui une fois adapté sur le goulot de la préforme vient en contact avec la face interne du goulot sur une zone d'étanchéité circonférentielle E prédéfinie.

Il convient de souligner que la préforme 1 de la figure 1 est un produit intermédiaire, et est destinée dans une étape ultérieure à être transformée par étirage et soufflage dans un moule, en sorte de former un récipient plastique (non représenté sur les figures). Lors de cette étape d'étirage-soufflage, seule la partie de la préforme située au-dessous de la collerette (portions 1 d, 1e et 1f) est étirée. La collerette C et le goulot 1c ne subissent quant à eux aucun étirage, et conservent donc les mêmes dimensions. Il en résulte que la zone d'étanchéité interne E précédemment définie sur le goulot de la préforme 1 n'est pas modifiée et reste la même pour le récipient final obtenu à partir de cette préforme 1.

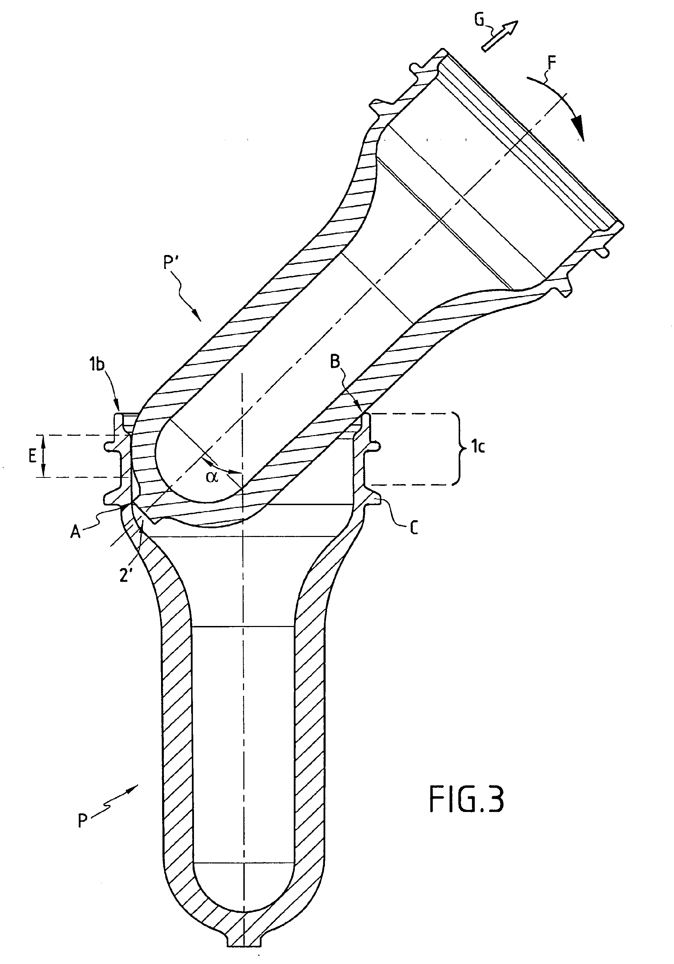

Dans le but d'illustrer et de mieux faire comprendre le problème technique résolu par l'invention, on a représenté sur la figure 3 deux préformes P et P', identiques et emboîtées l'une dans l'autre, lesquelles préformes ne constituent pas des préformes conformes à l'invention. En référence à cette figure 3, chaque préforme P ou P' comporte une zone d'étanchéité interne E de manière similaire à la préforme 1 de la figure 1. La préforme P' est emboîtée dans la préforme P dans une position d'emboîtement limite dans laquelle le point d'injection 2' de la préforme P' est en contact avec la paroi intérieure du goulot 1c de la préforme P (point de contact A), et à l'opposé, la paroi extérieure de la préforme P' vient en appui contre le buvant 1b de la préforme P (point de contact B). Dans cette position d'emboîtement limite, les axes longitudinaux des deux préformes forment un angle α. On constate que dans cette position d'emboîtement limite de la figure 3, le point de contact A précité est situé au-dessous du niveau de la zone d'étanchéité interne E, et dans le cas particulier illustré, arrive au niveau de la collerette C. Lorsque l'on bascule la préforme P' dans le sens de la flèche F, tout en la translatant selon son axe longitudinal dans le sens de la flèche G (figure 3), on comprend que le point d'injection 2' de la préforme P remonte à l'intérieur de la préforme P, et qu'il est ainsi possible d'amener en contact ce point d'injection 2' sur toute la hauteur de la zone d'étanchéité interne E de la préforme P.

Or il a été mis en évidence qu'avec des préformes du type des préformes P et P' de la figure 3, lors du stockage en vrac ou du transport en vrac de ces préformes, les préformes s'emboîtaient l'une dans l'autre occasionnant ainsi un risque élevé d'endommagement de la zone d'étanchéité interne du goulot d'une préforme lié au contact mécanique avec le point d'injection d'une autre préforme. Ce contact mécanique se traduit en effet par la formation de micro-rainures ou micro-rayures dans la paroi interne du goulot 1c, au niveau de la zone d'étanchéité interne E. Or ces micro-rainures sont préjudiciables à une bonne étanchéité, et sont donc des sources de fuites au niveau de la zone d'étanchéité interne. Sachant en outre qu'avec des préformes P, P' telles que celles illustrées sur la figure 3, le point d'injection 2' de la préforme P' qui est emboîtée dans la préforme P peut être amené en contact de toute la surface de la zone d'étanchéité interne E du goulot 1c de la préforme P, et il y a un risque que cette zone d'étanchéité E soit endommagée sur toute sa hauteur.

Il a en outre été constaté que le phénomène précité de détérioration mécanique de la face interne de la paroi du goulot au niveau de sa zone d'étanchéité (E) est d'autant plus important ou prépondérant, que la dureté du point d'injection du fond de la préforme est supérieur à la dureté du goulot, ce qui est le cas notamment pour toutes les préformes réalisées à partir d'un polymère ou d'un mélange de polymères, par exemple de type PET ou similaire, aptes à cristalliser, et pour lequel le point d'injection du fond de la préforme est à l'état cristallin tandis que la paroi interne du goulot de la préforme est à l'état amorphe.

L'invention est donc particulièrement avantageuse dans le cas de préformes en plastique réalisées à partir d'un matériau thermoplastique apte à cristalliser, tel que par exemple du PET ou mélange de polymères comportant du PET.

Comparativement à la figure 3, on a représenté sur la figure 2 deux préformes 1 et 1' de l'invention, identiques à la préforme 1 de la figure 1, et emboîtées l'une dans l'autre dans une position d'emboîtement limite comparable à celle de la figure 3. On peut constater que dans cette position d'emboîtement limite, le point de contact A entre le point d'injection 2 de la préforme 1' et la paroi interne du goulot 1c de la préforme 1 est situé dans la zone d'étanchéité interne E de la préforme 1. En outre, lorsque l'on cherche à faire basculer la préforme 1' dans le sens de la flèche F', en sorte de diminuer l'angle α entre les axes longitudinaux 1a des deux préformes 1 et 1', on constate que la partie 3 du fond 1f de la préforme 1', du fait de son rayon de courbure, vient au contact de la paroi interne du goulot 1c de la préforme 1, et par là-même oblige le point d'injection 2 de la préforme 1' à quitter la paroi interne du goulot 1c de la préforme 1. Ainsi, à l'intérieur de la zone d'étanchéité E, il subsiste une zone d'étanchéité E' protégée, qui s'étend en-dessous du point de contact A de la figure 2, et sur toute la circonférence du goulot 1c, laquelle zone ne peut pas être en contact avec le point d'injection 2 de la préforme 1' quelle que soit sa position d'emboîtement, ladite zone E' étant ainsi protégée contre les détériorations mécaniques liées à un emboîtement de préformes, en cours de stockage en vrac ou de transport en vrac. On préserve ainsi dans au moins une partie de la zone d'étanchéité E une zone d'étanchéité circonférentielle E' qui n'est pas détériorée, et qui permet ainsi de conserver le niveau d'étanchéité requis entre le bouchon de fermeture 6 et le goulot 1c.

L'invention n'est pas limitée à la géométrie et aux dimensions particulières de la préforme 1 des figures 1 ou 2, mais s'étend d'une manière générale à toute préforme à large col, avec zone d'étanchéité interne au niveau du goulot, laquelle préforme présente un fond 1f dont la géométrie et les dimensions (notamment le rayon de courbure) sont adaptées par rapport à la géométrie et aux dimensions du goulot 1c (notamment au diamètre interne d du goulot de la zone d'étanchéité E), en sorte de préserver une zone d'étanchéité circonférentielle E' qui ne peut pas être en contact avec le point d'injection d'une autre préforme identique emboîtée dans la préforme.

Egalement, dans une autre variante de réalisation, la zone d'étanchéité E' protégée contre les détériorations mécaniques peut s'étendre sur une hauteur plus importante que celle illustrée sur la figure 2, et peut par exemple s'étendre sur toute la hauteur de la zone d'étanchéité E, ou sur une hauteur moins importante que celle illustrée sur la figure 2.

Egalement, dans l'exemple particulier de réalisation des figures 1 ou 2, la zone d'étanchéité interne E s'étend entre une limite supérieure située à une distance d1 du buvant 1b, et une limite inférieure située à une distance d2 du buvant 1b de la préforme. En pratique, dans la plupart des préformes, la zone d'étanchéité E est telle que la distance d1 est généralement comprise entre 5 mm et 10 mm, et la distance d2 est inférieure à 15 mm. Ceci n'est toutefois pas limitatif de l'invention. Dans l'exemple de réalisation de l'invention, selon le type de moyen de fermeture utilisé, la zone d'étanchéité E (et par là-même la zone d'étanchéité E' protégée contre les détériorations mécaniques) peut s'étendre jusqu'au buvant 1b de la préforme, et/ou la distance d1 peut être supérieure à 10 mm, ou inférieure à 5 mm et/ou la distance d2 peut être supérieure à 15 mm.

## Revendications

1. Ensemble préforme plastique (1) / moyen de fermeture (6), la préforme plastique (1) consistant en un corps creux tubulaire qui est obtenu par injection, qui est ouvert à une première extrémité dite buvant (1b), et qui est fermé à son extrémité (1f) opposée par une première portion d'extrémité formant le fond de la préforme, la partie centrale dudit fond correspond au point d'injection du corps creux et forme une portion (2) en saillie vers l'extérieure, ledit fond (1f) se prolongeant par une deuxième portion (1e) sensiblement cylindrique, ledit corps creux comportant en outre une troisième portion (1c) formant goulot qui s'étend depuis le buvant (1b), et qui présente un diamètre intérieur (D, D') supérieur au diamètre extérieur (d) de ladite deuxième portion sensiblement cylindrique (1e), le moyen de fermeture (6), une fois mis en place sur le goulot (1c) de la préforme, est en contact avec la paroi interne du goulot (1c) dans une zone d'étanchéité circonférentielle interne (E), **caractérisé en ce que** la zone d'étanchéité interne (E) présente une limite supérieure située à une distance d1 du buvant (1 b) de la préforme, et une limite inférieure située à un distance d2 du buvant (1 b) de la préforme, la distance d1 étant comprise entre 5 et 10 mm, et la distance d2 étant inférieure à 15 mm, et **en ce que** la géométrie et les dimensions du fond (1f) de la préforme sont adaptées par rapport à la géométrie et aux dimensions du goulot (1c) de telle sorte qu'il subsiste dans ladite zone d'étanchéité interne (E) du goulot (1 c) une zone circonférentielle protégée (E') qui ne peut pas être en contact avec le point d'injection (2) en saillie d'une autre préforme identique (1').

2. Ensemble selon la revendication 1 **caractérisé en ce que** le point d'injection (2) de la préforme présente une dureté supérieure à la dureté de la paroi interne du goulot (1c) de la préforme au niveau au moins de la zone d'étanchéité (E).

3. Ensemble selon la revendication 1 ou 2 **caractérisé en ce qu**'elle est réalisée dans un matériau thermoplastique apte à cristalliser.

4. Ensemble selon la revendication 3 **caractérisé en ce que** la préforme est en PET ou réalisée à partir d'un matériau thermoplastique comportant du PET.

## Claims

1. Plastic preform (1)/closure means (6) assembly, the plastic preform (1) consisting of a hollow tubular body that is formed by injection, that is open at a first end known as the wide mouth (1b), and that is closed at its opposite end (1f) by a first end portion that forms the base of the preform, the central part of said base corresponding to the injection point of the hollow body and forming a portion (2) protruding towards the outside, said base (1f) being extended by a second essentially cylindrical portion (1e), said hollow body including in addition a third portion (1c) forming the neck, which extends from the wide mouth (1b) and which possesses an internal diameter (D, D') superior to the external diameter (d) of said second essentially cylindrical portion (1e), the closure means (6) once having been placed on the neck (1c) of the preform being in contact with the internal wall of the neck (1c) in a circumferential internal sealing zone (E), **characterised in that** the internal sealing zone (E) possesses an upper edge situated at a distance d1 from the wide mouth (1b) of the preform, and a lower edge situated at a distance d2 from the wide mouth (1b) of the preform, the distance d1 being comprised between 5 and 10 mm, and the distance d2 being less than 15 mm, and **in that** the geometry and the dimensions of the base (1f) of the preform are adapted in relation to the geometry and the dimensions of the neck (1c) such that in said internal sealing zone (E) of the neck (1c) there remains a circumferential protected zone (E') which cannot come into contact with the protruding injection point (2) of another identical preform (1').

2. Assembly according to claim 1, **characterised in that** the injection point (2) of the preform possesses a hardness greater than the hardness of the internal wall of the neck (1c) of the preform, at least at the level of the sealing zone (E).

3. Assembly according to claim 1 or 2, **characterised in that** it is made out of a thermoplastic material liable to crystallise.

4. Assembly according to claim 3, **characterised in that** the preform is of PET or made out of a thermoplastic material including PET.

## Patentansprüche

1. Plastische oder aus Kunststoff bestehende Vorformanordnung (1) bzw. Schließeinrichtung (6), wobei die Kunststoff oder plastische Vorform (1) aus einem rohrförmigen Hohlkörper besteht, der durch Spritzen gewonnen wird, an einem ersten sogenannten Trink- oder Mündungsende (1b) offen ist und an seinem entgegengesetzten Ende (1f) von einem ersten Endabschnitt verschlossen wird, der den Boden der Vorform bildet, wobei der Mittelteil des Bodens dem Einspritzpunkt des Hohlkörpers entspricht und einen nach außen vorspringenden Abschnitt (2) bildet, wobei der Boden (1f) sich über einen im wesentlichen zylindrischen, zweiten Abschnitt (1e) fortsetzt, wobei der Hohlkörper ferner einen halsartigen, dritten Abschnitt (1c) aufweist, welcher sich von der Mündung (1b) ausgehend erstreckt, und einen Innendurchmesser (D, D') größer als der Außendurchmesser (d) des im wesentlichen zylindrischen, zweiten Abschnitts (1e) aufweist, wobei die Schließeinrichtung (6) nach deren Ansetzen an den Hals (1c) der Vorform in einem umlaufenden Innenabdichtungsbereich (E) mit der Innenwand des Halses (1c) in Kontakt steht, **dadurch gekennzeichnet, dass** der Innenabdichtungsbereich (E) eine obere Begrenzung aufweist, die in einem Abstand d1 von der Mündung (1b) der Vorform liegt, sowie eine untere Begrenzung, die in einem Abstand d2 von der Mündung (1b) der Vorform liegt, wobei der Abstand d1 zwischen 5 mm und 10 mm beträgt und der Abstand d2 kleiner als 15 mm ist, und dass die Geometrie und die Abmessungen des Bodens (1f) der Vorform gegenüber der Geometrie und den Abmessungen des Halses (1c) so abgestimmt sind, dass in dem Innenabdichtungsbereich (E) des Halses (1c) ein umlaufender Schutzbereich (E') bestehen bleibt, der nicht mit dem vorspringenden Einspritzpunkt (2) einer anderen identischen Vorform (1') in Kontakt stehen kann.

2. Anordnung nach Anspruch 1, **dadurch gekennzeichnet, dass** der Einspritzpunkt (2) der Vorform eine Härte aufweist, die größer als die Härte der Innenwand des Halses (1c) der Vorform zumindest bei dem Abdichtungsbereich (E) ist.

3. Anordnung nach Anspruch 1 oder 2, **dadurch gekennzeichnet, dass** sie aus einem kristallisierbaren thermoplastischen Material ausgebildet ist.

4. Anordnung nach Anspruch 3, **dadurch gekennzeichnet, dass** die Vorform aus PET besteht oder ausgehend von einem PET enthaltenden thermoplastischen Material ausgebildet ist.
